# EUROPÄISCHE PATENTSCHRIFT

(11) **EP 2 796 033 B1**
(45) Veröffentlichungstag und Bekanntmachung des Hinweises auf die Patenterteilung: **16.03.2016**
(21) Anmeldenummer: 14001421.8
(22) Anmeldetag: 17.04.2014
(51) Int. Cl.: A01F 15/07

(54) **Press- Wickelkombination für Quaderballen**
Pressing-wrapping combination for rectangular bales
Combinaison d'une presse et d'un dispositif d'enroulement pour balles rectangulaires

(30) Priorität: 26.04.2013 DE 102013007296
(43) Veröffentlichungstag der Anmeldung: 29.10.2014
(73) Patentinhaber: Maschinenfabrik Bernard Krone GmbH, 48480 Spelle (DE)
(72) Erfinder: Horstmann, Josef, 49479 Ibbenbüren (DE)

(56) Entgegenhaltungen:
- EP-A1- 2 160 939
- WO-A1-2011/142660
- DE-A1- 4 037 533
- DE-A1- 19 645 640
- DE-A1- 19 654 982
- GB-A- 2 394 932

## Beschreibung

Die Erfindung betrifft eine Press- Wickelkombination, insbesondere als von einer Zugmaschine gezogene und angetriebene Landmaschine für das Aufsammeln, Pressen und Einwickeln von landwirtschaftlichem Erntegut, wobei die dabei entstehenden quaderförmigen Pressballen direkt nach dem Pressen in zumindest zwei voneinander unabhängigen, aufeinander folgenden Wickelstationen der Ballenwickelvorrichtung der Press- Wickelkombination komplett mit Wickelmaterial umhüllt und anschließend vorzugsweise auf dem Feld abgelegt werden.

Zur Bergung von landwirtschaftlichen Erntegütern werden häufig Großballenpressen in den bekannten grundlegenden Ausführungen als Rundballenpressen oder als Quaderballenpressen eingesetzt, wobei Quaderballenpressen durch die höhere Erntegutverdichtung und durch ihr kontinuierliches Pressverfahren gegenüber den absätzig arbeitenden Rundballenpressen leistungsfähiger sind.

In der Landwirtschaft ist es zunehmend üblich, Gras zu Großballen zu pressen und diese durch Silieren für die Winterfütterung haltbar zu machen. Dazu ist es erforderlich, das Futter möglichst hoch zu verdichten und unter Luftabschluss zu bringen, wozu der Ballen mit einer von Vorratsrollen gelieferten Endlos- Stretchfolie luftdicht umwickelt wird. Diverse Ausführungen von Ballenwicklern, welche bevorzugt als an einen Schlepper angehängte Maschinen zu den auf dem Feld liegenden Ballen gezogen werden, den Ballen selbsttätig aufnehmen, einwickeln und wieder auf dem Feld ablegen, sind sowohl für Rundballen als auch für Quaderballen bekannt.

Da dieser zusätzliche Arbeitsgang sehr zeitaufwändig und insbesondere durch einen zusätzlich notwendigen Schlepper mit Fahrer sehr kostenintensiv ist, ist man bestrebt, das Pressen und das Wickeln mit einer Maschinenkombination gemeinsam und gleichzeitig durchzuführen. Im Bereich der Rundballenpressen ist das gelungen. Diverse Rundballen Press- Wickelkombinationen verschiedener Hersteller sind im Markt eingeführt und verrichten zuverlässig ihre Arbeit.

Im Bereich der Quaderballenpressen jedoch, ist es noch nicht gelungen eine serienreife Press- Wickelkombination vorzustellen, wobei gerade bei den leistungsfähigen Quaderballenpressen eine derartige Kombination große Vorteile bringen würde. Insbesondere die gleichmäßige Verteilung der Folie auf der Ballenoberfläche mit der erforderlichen Folienspannung ist bei den ungleichförmigen Quaderballen gegenüber den Rundballen ungleich schwieriger. Ein weiteres Kriterium für die Wirtschaftlichkeit einer Press- Wickelkombination ist die Zykluszeit für das Einwickeln des Ballens. Diese muss unter der Presszeit für einen Ballen liegen, was bei Quaderballen ebenfalls wesentlich schwieriger zu erreichen ist als bei Rundballen.

Die DE 40 37 533 A1 offenbart eine Vorrichtung zum Umwickeln von Quaderballen, bei der unter anderem zur Reduzierung der Wickelzeit das Umwickeln des Ballens auf zwei hintereinander angeordneten Wickelstationen aufgeteilt wird. Die direkt mit der Ballenpresse kombinierbare Vorrichtung bildet mit dieser eine Press- Wickelkombination, welche jedoch nachteilig bei den heute geforderten Ballenabmessungen in ihrer Baulänge nicht innerhalb der gesetzlichen Bestimmungen für die Zulassung zum Straßenverkehr realisierbar ist. Auch wäre eine Presse der beschriebenen Art durch ihre Baulänge und der notwendigen, zusätzlichen für die Handhabung auf schmalen Feldwegen und am Vorgewende extrem unhandlich.

Der Erfindung liegt demgemäß die Aufgabe zugrunde, eine Press- Wickelkombination für quaderförmige Großballen bereitzustellen, welche insbesondere durch kompakte Abmessungen die Nachteile des Standes der Technik vermeidet und mit geringem Zeitaufwand hoch verdichtete Quaderballen luftdicht umhüllt.

Die Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Press- Wickelkombination weist eine Presseinheit auf, welche bereits in ihrer äußeren Erscheinung von den allgemein bekannten Quader- Großballenpressen abweicht. Durch geschickte Auslegung der Rahmengeometrie wird erreicht, dass der Presskanal nach hinten, in Richtung entgegen der Fahrtrichtung, ansteigt und dadurch der Abstand der Auslassöffnung des Presskanals zum Erdboden wesentlich größer ist, als aus dem Stand der Technik bekannt. Dieser große Abstand ermöglicht die Ausrüstung der Presse mit einer erfindungsgemäß gestalteten Ballenwickelvorrichtung. Die Wickelvorrichtung ist vorteilhaft mit zwei getrennt voneinander arbeitenden Wickelstationen ausgerüstet. Durch die Trennung des gesamten Umhüllungsvorgangs der Ballen auf zumindest zwei Stationen wird das gleichzeitige Wickeln in unterschiedlichen Wickelebenen an verschiedenen Ballen ermöglicht. Nur so ist eine Gesamtwickelzeit zu erreichen, welche innerhalb der Taktzeit der Ballenherstellung liegt und somit die Maschinenleistung nicht herabsetzt.

Durch die in verschiedenen Höhen praktisch übereinander liegende Anordnung der Wickelstationen zueinander wird die besonders vorteilhafte kurze Ausführung der erfindungsgemäßen Press- Wickelkombination erreicht. Gleichzeitig ergibt sich durch die übereinander liegende Anordnung der Wickelstationen ein vertikaler Mindestabstand der zumindest annähernd horizontalen Ebenen zueinander, auf denen sich die zu umwickelnden Pressballen in den Wickelstationen befinden. Dieser vertikale Abstand muss theoretisch mindestens der Ballenhöhe entsprechen. In der Praxis sind jedoch größere Abstände notwendig, um Freiraum für die Umwicklung und für Trag- und Fördereinrichtungen zu haben. So ergibt sich schnell ein Abstand der horizontalen Ebenen zueinander von nahezu der doppelten Ballenhöhe. Unter Berücksichtigung eines zusätzlichen notwendigen Bodenabstandes der unteren Ebene ergibt sich so ein Abstand der Presskanalauslassöffnung vom Boden, der sich erheblich vom Stand der Technik unterscheidet.

Die erste Wickelstation schließt sich direkt an den Presskanal der Quaderballenpresse der Press- Wickelstation an. Somit wird der Ballenvorschub, welcher durch die Presshübe der Ballenpresseinrichtung entsteht, gleichzeitig als Wickelvorschub für das Umwickeln des Ballens an seinen Längsaußenseiten genutzt. Dabei rotiert zumindest ein Rollenhalter mit einer Wickelmaterialrolle auf einer festen Führungsbahn in einer vertikalen Ebene um den aus dem Presskanal austretenden Pressballen und gibt dabei durch seine an den Pressvorschub angepasste Geschwindigkeit das Wickelmaterial mit einer vorbestimmten Anzahl an überdeckenden Lagen an den Ballen ab. Am Ende eines Ballens wird die Folie abgetrennt, um an den nächsten Ballen wieder angelegt zu werden, ohne dass die Ballen durch die Folienbahn verbunden sind. Weil die Pressballen in der ersten Wickelstation um ihre horizontale Längsachse umwickelt werden, wird die erste Wickelstation als Horizontalwickler bezeichnet.

Durch die geschickte Kombination der Quaderballenpresse mit dem zuvor beschriebenen Horizontalwickler ist diese in ihren Ausmaßen nicht länger als eine Presse ohne Wickelstation. Durch die erfindungsgemäße Anordnung einer zweiten Wickelstation zum Umwickeln der noch offenen Stirnflächen der Pressballen ändert sich das auch kaum, da diese nicht in Längsrichtung hinter der ersten Wickelstation folgt, sondern unterhalb dieser platziert ist. Ermöglicht wird das, wie bereits erwähnt, durch die Höherlegung des Presskanalauslasses.

Die zweite Wickelstation wird vorteilhaft ebenfalls nach dem Prinzip der ersten Wickelstation, mit zumindest einem um den Ballen umlaufenden Rollenhalter zur Aufnahme der Wickelmaterialrolle ausgeführt. Weitere Ausführungsformen, beispielsweise mit sich drehendem Ballen und feststehender Wickelmaterialrolle, wie aus dem Stand der Technik von diversen Ballenwickelmaschinen bekannt, sind an dieser Stelle ebenfalls denkbar aber unvorteilhafter.

Da in der vorteilhaften Ausführungsform der zweiten Wickelstation der zumindest eine Rollenhalter um eine vertikale Wickelachse der Pressballen umläuft, wird die zweite Wickelstation als Vertikalwickler bezeichnet. Durch eine besonders vorteilhafte Schwenkbewegung der Pressballen um eine quer zur Fahrtrichtung liegende Horizontalachse verschwenkt die vertikale Wickelachse relativ zum Pressballen ebenfalls während des Wickelvorgangs in der zweiten Wickelstation. Dadurch wird gewährleistet, dass die Wickelfolie die Stirnseiten auch über die Kanten und Ecken hinaus sich luftdicht abdeckt.

Die Führungsbahnen der beiden Wickelstationen, an denen die Rollenhalter mit den Wickelmaterialrollen um die Pressballen umlaufen, sind in einer einfachen Ausführungsform als kreisrunde Führungsbahnen ausgebildet. In weiteren Ausführungsformen können diese jedoch auch in quadratischer oder rechteckiger Form der jeweiligen Ballenkontur angepasst sein. Eine derartige Ausführungsform ist zwar aufwändiger in der Herstellung, kann aber bei großen Ballenabmessungen platzsparender sein und die Maschinenhöhe oder Breite reduzieren. Insbesondere beim Vertikalwickler der zweiten Wickelstation, bei der der Pressballen in seiner Längserstreckung innerhalb der Führungsbahn liegt, kann dies notwendig sein, um im Rahmen der gesetzlichen Maximalbreite für den Straßenverkehr zu bleiben. Ausführungsformen mit in einem Drehpunkt aufgehängten Wickelarmen, an denen die Wickelmaterialrollen gehaltert sind und mit ihnen die Pressballen zur Abgabe der Stretchfolie an die Ballen umkreisen, sind aus dem Stand der Technik ebenfalls bekannt. Die Verwendung bei der Press- Wickelkombination nach der Erfindung ist insbesondere aufgrund des hohen Platzbedarfs für die zentrale Aufhängung als nachteilig zu sehen.

Für den Ballentransport von der ersten Wickelstation über die zweite Wickelstation bis zur Ablage auf dem Feld sind verschiedenste Förder- und Handlingeinrichtungen denkbar. Wichtige Kriterien für die Ausführung sind, kurze Bauweise, einfache, aber betriebssichere Funktionen und schonender Umgang mit den Pressballen, um Beschädigungen der Umwicklung zu vermeiden. Außerdem sollte eine direkte Durchleitung und Ablage von beispielsweise Strohballen, die nicht gewickelt werden sollen, auch möglich sein.

Gemäß einer bevorzugten Ausführungsform der vorliegenden Erfindung weist die Ballenwickelvorrichtung zur Aufnahme, Positionierung und Förderung der Pressballen zwei Tische auf, wobei beide Tische schwenkbeweglich, beziehungsweise kippbar um quer zur Fahrtrichtung ausgerichtete Horizontalachsen gelagert sind. Als Antriebe für die Bewegung sind die Tische vorzugsweise mit hydraulischen Zylindern oder anderen geeigneten Drehantrieben versehen. Zusätzlich sind die Tische so ausgeführt, dass die Pressballen sich entlang der Tische in Längsrichtung der Press- Wickelkombination bewegen können. Dazu sind die Tische mit entsprechenden Fördermitteln wie Förderrollen oder Förderbändern versehen, wobei Förderbänder aufgrund der besseren Griffigkeit und zugleich schonenderen Behandlung der bereits zumindest um die Längsseiten umwickelten Ballen zu bevorzugen sind.

Die horizontalen Bewegungsachsen der Tische sind besonders trickreich derart angeordnet, dass nach der Verschwenkung beider Tische in eine auf einander abgestimmte Übergabeposition die Fördermittel beider Tische eine durchgängige Fördereinrichtung zur Überführung der Pressballen vom ersten auf den zweiten Tisch bilden. Bei dieser Überführung der Pressballen von dem ersten Tisch auf den zweiten Tisch, findet erfindungsgemäß eine horizontale und vertikale, lineare Verlagerung der Pressballen statt. Die horizontale Verlagerung ist dabei in Fahrtrichtung und die vertikale Verlagerung nach unten in Richtung Erdboden gerichtet.

Zur optimalen Aufnahme, Führung und Positionierung der Pressballen weisen die Tische weitere Mittel zur Unterstützung auf. Beim ersten Tisch, der die Pressballen direkt nach dem Verlassen des Presskanals und dem gleichzeitigen Durchlaufen der ersten Wickelstation aufnimmt, ist besonders zu beachten, dass sich dieser in einer großen Höhe befindet. Feldunebenheiten wirken sich dort besonders stark aus, weshalb eine sichere Führung und Fixierung der Ballen auf dem Tisch durch entsprechende Mittel, wie Führungs- und Andruckrollen oder ähnlichem gewährleistet werden müssen. Auf dem zweiten Tisch liegend, werden die Pressballen durch die zweite Wickelstation um eine zumindest annähernd vertikale Wickelachse an ihren Außenlängsseiten und den Stirnseiten mit Wickelmaterial umwickelt. Das bedeutet, dass die Ballen auch bei variierenden Ballenlängen immer möglichst genau im Zentrum des mindestens einen umlaufenden Rollenhalters mit der Wickelmaterialrolle positioniert und zur Sicherheit auch fixiert sein müssen. Auch diese Problemstellungen werden durch die erfindungsgemäße Press- Wickelkombination gelöst, wobei zur Lösung verschiedenste Ausführungsformen denkbar sind. Insbesondere ist bei den Positionierungs- und Fixierungsmitteln des zweiten Tisches zu beachten, dass diese spätestens mit Beginn des Wickelvorgangs durch den Vertikalwickler der zweiten Wickelstation, die Seiten- und Stirnflächen des Pressballens freigeben müssen, um ein vollständiges, luftdichtes Umhüllen des Ballens zu ermöglichen.

Zur Optimierung der Umhüllung verschwenkt der zweite Tisch während des Wickelvorgangs derart um seine quer zur Fahrtrichtung ausgerichtete Horizontalachse, dass die Wickelmaterialbahn auch die stirnseitigen Ballenkanten möglichst weit überdeckt. Nach erfolgter Umhüllung wird auch in der zweiten Wickelstation die Wickelmaterialbahn in bekannter Weise geklemmt und abgetrennt.

Als weitere besondere Lösung der Press- Wickelkombination nach der Erfindung wird nun der zweite Tisch in einer weiteren Funktion als Ballenablage aktiv. Dazu wird er wiederum um seine Horizontalachse derart verschwenkt, dass der Pressballen nach hinten, entgegengesetzt zur Fahrtrichtung, unterstützt von den Fördermitteln des Tisches diesen bodennah verlässt und schonend auf dem Feld abgelegt wird.

Um Beschädigungen an der Ballenumhüllung durch die Ablage auf dem Feld während er Erntefahrt zu vermeiden, werden in einer vorteilhaften Ausführungsform der Steuerung der erfindungsgemäßen Press- Wickelkombination verschiedene Parameter, wie zum Beispiel Ballenlänge, Ballengewicht und Fahrgeschwindigkeit berücksichtigt. Diese Parameter beeinflussen dann automatisch Einstellungen wie beispielsweise Schwenkwinkel des Tisches, Schwenkgeschwindigkeit des Tisches und Transportgeschwindigkeit der Fördermittel des zweiten Tisches für die Ballenablage.

Der Steuerung einer Press- Wickelkombination kommen ohnehin ganz besondere Aufgaben zu. So müssen alle Abläufe derart aufeinander abgestimmt und ständig überwacht werden, dass eine unterbrechungsfreie Erntefahrt gewährleistet ist. Nur so können alle Vorteile der Erfindung erreicht werden.

Somit wird eine Press- Wickelkombination bereitgestellt, die durch ihre kompakten Abmessungen keinen Nachteil gegenüber alleinigen Quaderballenpressen hat. Durch die Vermeidung eines zusätzlichen Fahrwerks ist sie ebenso handlich, vermeidet zusätzliches Gewicht und Kosten. Durch die Erfindung wird der Umhüllungsvorgang von quaderförmigen Pressballen erheblich beschleunigt, da er während des Pressens nebenbei erfolgt. Es wird eine zusätzliche Maschine mit Zugmaschine und Fahrer eingespart. Gleichzeitig verringern sich dadurch die Feldüberfahrten, sprich Bodenbelastungen.

In einer besonderen Ausführungsform ist es denkbar, die Ballenwickelvorrichtung der erfindungsgemäßen Press- Wickelkombination demontierbar zu gestalten. Für das Pressen von Ballen, die nicht umhüllt werden sollen, könnte dann beispielsweise eine Ballensammel- und/oder Stapelvorrichtung angebaut werden. Die Voraussetzungen dafür sind insbesondere durch den hochgelegten Presskanalauslass besonders vorteilhaft gegeben.

Die Erfindung ist nicht auf die bisher beschriebene Form einer gezogenen Press-Wickelkombination beschränkt. Eine selbstfahrende Erntemaschine mit einer Press-Wickelkombination nach der Erfindung fällt ebenfalls unter den Schutzbereich der Patentansprüche.

Im Folgenden soll ein Ausführungsbeispiel die Erfindung und ihre Vorteile anhand der beigefügten Figuren näher erläutern.
**Fig. 1** zeigt eine Perspektivansicht einer erfindungsgemäßen Press- Wickelkombination in gezogener Ausführung, wobei zur besseren Erkennbarkeit der Maschinenbaugruppen die Verkleidungen entfernt sind;
**Fig. 2** zeigt eine vergrößerte, abgeschnittene hintere Teilansicht der Press- Wickelkombination aus **Fig. 1** von der Seite, wobei ein Betriebzustand dargestellt ist, wie er zu Arbeitsbeginn auf einem neuen Schlag normalerweise üblich ist;
**Fig. 3 - 9** zeigen in gleicher Ansicht wie **Fig. 2** die Press- Wickelkombination aus **Fig. 1**, wobei jeweils in Teilschritten die Abläufe dargestellt sind, die zur vollständigen Umhüllung eines Pressballens bis zur Ablage auf dem Feld stattfinden.

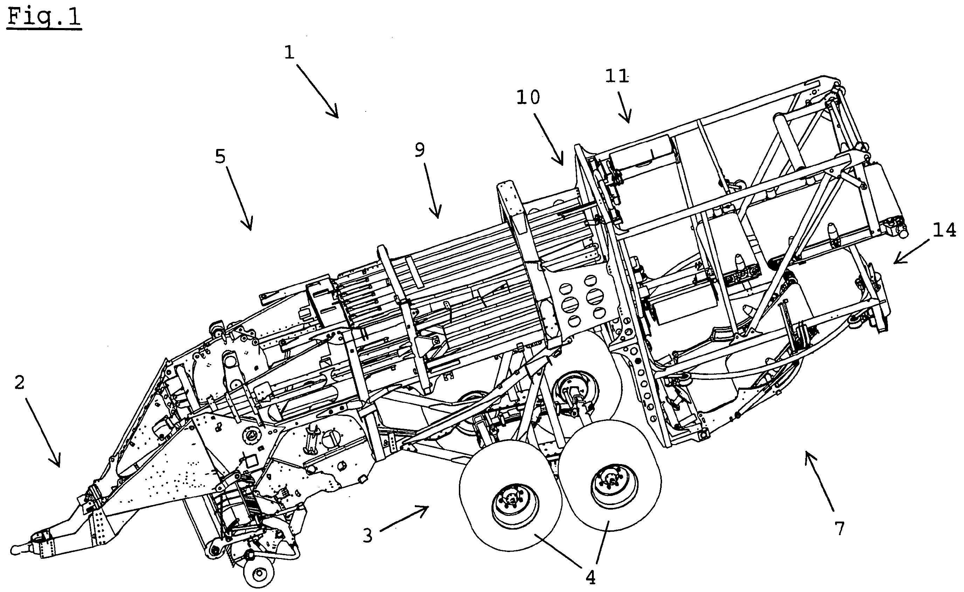

**Fig. 1** zeigt in einer Perspektivansicht eine erfindungsgemäße Press- Wickelkombination 1 gemäß einem Ausführungsbeispiel als gezogene Maschine. Sie wird über eine Zugdeichsel 2 an ein nicht dargestelltes Zugfahrzeug angehängt und stützt sich für die Transport- und Arbeitsfahrt über ein Fahrwerk 3 und Räder 4 zum Erdboden ab, wobei die Transportrichtung F auch die Arbeitsrichtung ist. Hauptsächlich besteht die Press-Wickelkombination 1 aus einer Quaderballenpresse 5 zur Herstellung von quaderförmigen Pressballen 6 und einer nachgeordneten Ballenwickelvorrichtung 7 für das direkte luftdichte Umhüllen der Pressballen 6 mit Wickelfolie 8 und anschließende Ablegen der Ballen auf dem Feld.

Zur Erläuterung der Erfindung sind nur erfindungswesentliche Merkmale der Quaderballenpresse 5 genannt, darüber hinaus kann diese von bekannter Bauart sein und übliche Merkmale aufweisen. Auffällig und abweichend gegenüber bekannten Bauformen von Quaderballenpressen ist der Verlauf des Presskanals 9 der Quaderballenpresse 5 der erfindungsgemäßen Press- Wickelkombination 1. Im Normalfall ist der Presskanal derart nach hinten abfallend ausgebildet, dass der Presskanalauslass 10 einen geringen Abstand zum Erdboden aufweist, um so eine möglichst schonende Ablage der Pressballen zu ermöglichen.

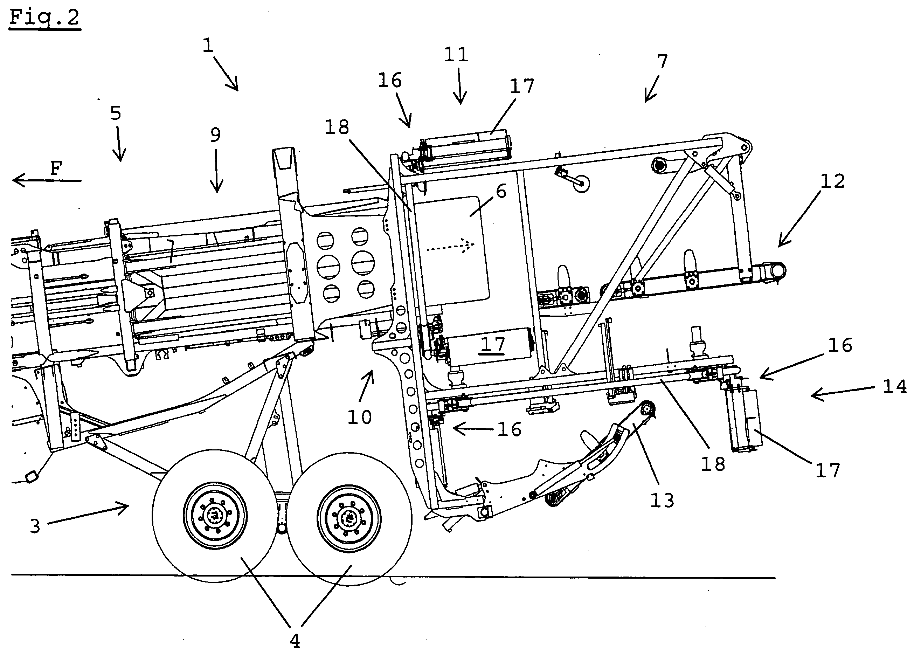

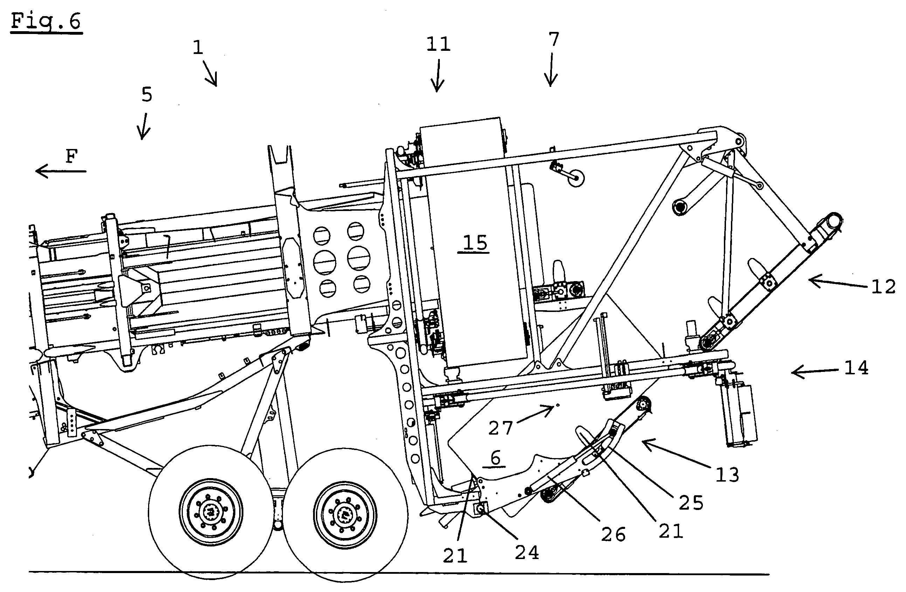

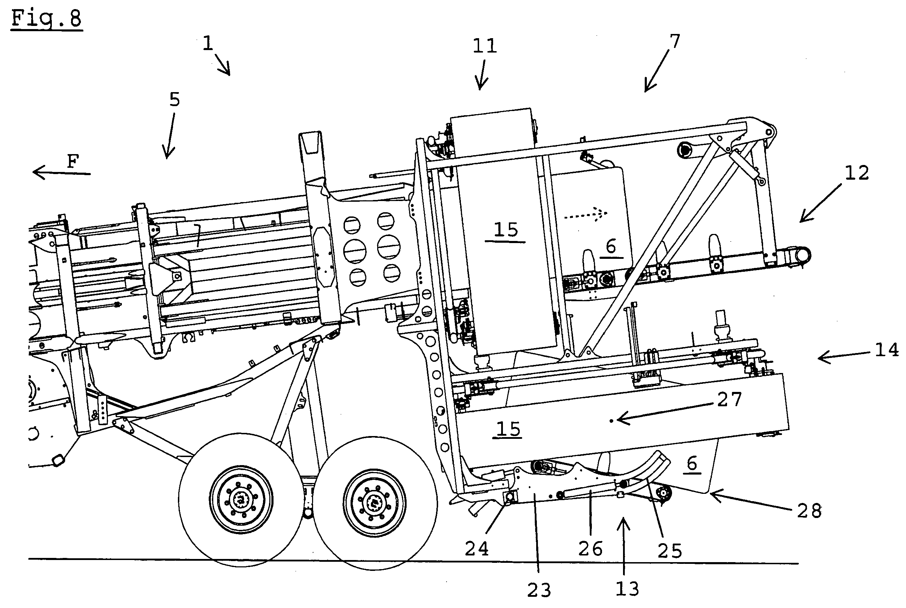

**Fig. 1** und insbesondere die Seitenansichten der **Fig. 2 - 9** zeigen deutlich, wie bei der erfindungsgemäßen Ausführungsform der Quaderballenpresse 5 der Presskanal 9 in seinem Verlauf nach hinten hin ansteigt. Durch diese geschickte Hochlegung der Presskanalauslassöffnung 10 konnte der notwendige Freiraum für den Anbau einer Ballenwickelvorrichtung 7 nach der Erfindung geschaffen werden. Diese, insbesondere in den vergrößert dargestellten Seitenansichten der **Fig. 2 - 9****,** durch das Weglassen von Verkleidungen und nicht erfindungsrelevanten Bauteilen gut zu erkennende Ballenwickelvorrichtung 7 zeichnet sich besonders durch ihre Kompaktheit aus.

Die Funktionseinheiten, erste Wickelstation 11, erster Tisch 12, zweiter Tisch 13 und zweite Wickelstation 14 der Ballenwickelvorrichtung 7 sind gemäß der Erfindung derart zueinander angeordnet, dass sie die Gesamtlänge der Press- Wickelkombination 1 gegenüber einer alleinigen Quaderballenpresse nicht negativ beeinflussen. Erfindungswesentlich ist dabei die Aufteilung des Umhüllungsvorgangs auf zwei Stationen, wobei diese nicht hintereinander sondern übereinander angeordnet sind.

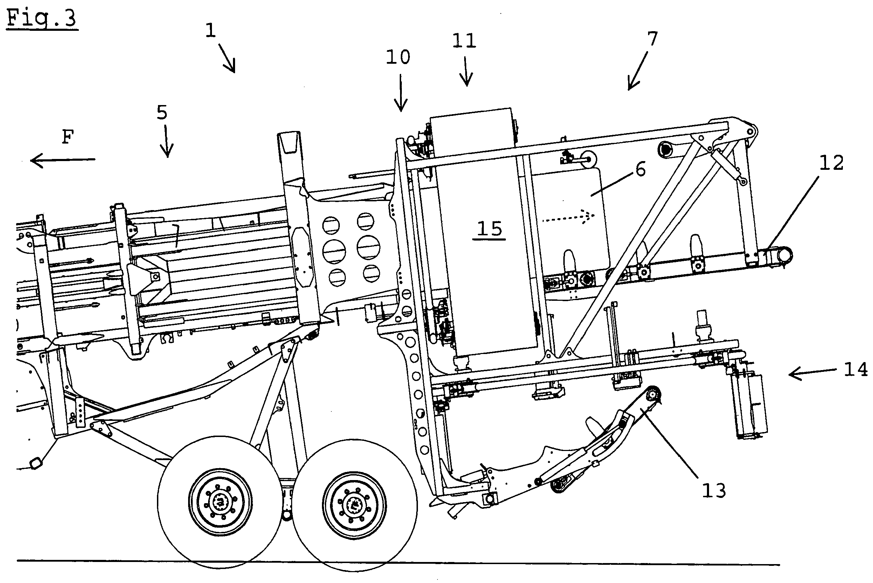

**Fig. 2** zeigt die Ballenwickelvorrichtung 7 des Ausführungsbeispiels einer erfindungsgemäßen Press- Wickelkombination 1, bei der sich die Funktionseinheiten **11 -** 14 in einer Grundstellung befinden, wie sie beim Straßentransport anzutreffen ist. Es befindet sich kein Pressballen 6 im Bereich der Ballenwickelvorrichtung 7. Mit Beginn der Pressfahrt bildet sich der erste Pressballen 6, welcher mit zunehmendem Pressfortschritt aus dem Presskanalauslass 10 austritt. Genau diese Betriebsstellung ist in **Fig. 2** wiedergegeben. Die weiteren **Fig. 3 - 9** stellen schrittweise die weiteren Betriebsstellungen dar, die bis zur Ablage des Pressballens 6 auf dem Feld durchlaufen werden. Der aus dem Presskanalauslass 10 austretende Pressballen 6 hat mit der in **Fig.2** dargestellten Position eine Stellung zur ersten Wickelstation 11 erreicht, in der der Wickelvorgang um seine horizontale Längsachse beginnt. Dazu wird Wickelmaterial 15, bevorzugt Stretchfolie von durch Rollenhalter 16 gehalterte Wickelmaterialrollen 17 durch Umkreisen des Pressballens 6 abgezogen und unter Vorspannung auf diesen übertragen. Dieser Vorgang ist von anderen Ballenwicklern allgemein bekannt und wird deshalb nicht näher beschrieben.

Als Besonderheit der erfindungsgemäßen Press- Wickelkombination 1 ist jedoch zu bemerken, dass die Geschwindigkeit, mit der die Rollenhalter 16 mit den Wickelmaterialrollen 17 an der Führungsbahn 18 der ersten Wickelstation 11 den Pressballen umkreisen, in Abhängigkeit des Ballenvorschubs durch den Pressvorgang gesteuert wird. So wird eine vorgegebene, gleichmäßige Wickellagenanzahl über die gesamte Ballenlänge erzielt. In **Fig.3** wird diese Betriebssituation dargestellt.

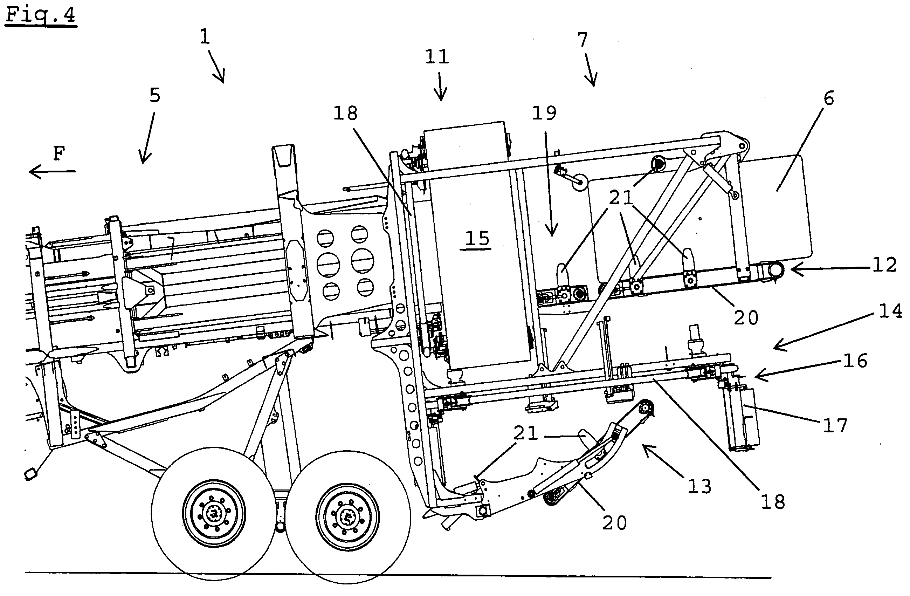

Nach Erreichen der gewünschten Wickellagenanzahl werden die Folienbahnen abgetrennt und gehalten. Der Pressballen 6 ist dabei bereits soweit aus dem Presskanal 9 ausgetreten, dass er auf dem Zwischenförderer 19 und mit seinem vorderen Ende auf dem ersten Tisch 12 aufliegt. Sowohl der Zwischenförderer 19 als auch der erste Tisch 12 weisen griffige, angetriebene Fördereinrichtungen 20 auf, die den Pressballen 6 nach dem Abschneiden der Folienbahnen nach hinten entgegen der Fahrtrichtung F auf den ersten Tisch 12 befördern. Diese Betriebssituation zeigt **Fig. 4****.** Die Fördereinrichtungen 20 des Zwischenförderers 19 des ersten Tisches 12 und des zweiten Tisches 13, sind bei dem beschriebenen Ausführungsbeispiel als Gummiförderbänder mit einer, besonders für folienumwickelte Pressballen sehr griffigen Oberfläche ausgebildet. In alternativen Ausführungsformen sind an diesen Stellen auch Förderrollen oder Ballenmanipulatoren in Greiferform und ähnliches denkbar.

Zur genauen Positionierung und Sicherung der Pressballen 6 sind der erste und zweite Tisch 12, 13 mit Positionier- und Haltemitteln 21 ausgestattet.

**Fig. 4** ist auch zu entnehmen, dass nach Übernahme eines umwickelten Ballens 6 auf den ersten Tisch 12, bereits mit der Umwicklung des nächsten Ballens in der ersten Wickelstation 11 begonnen wird.

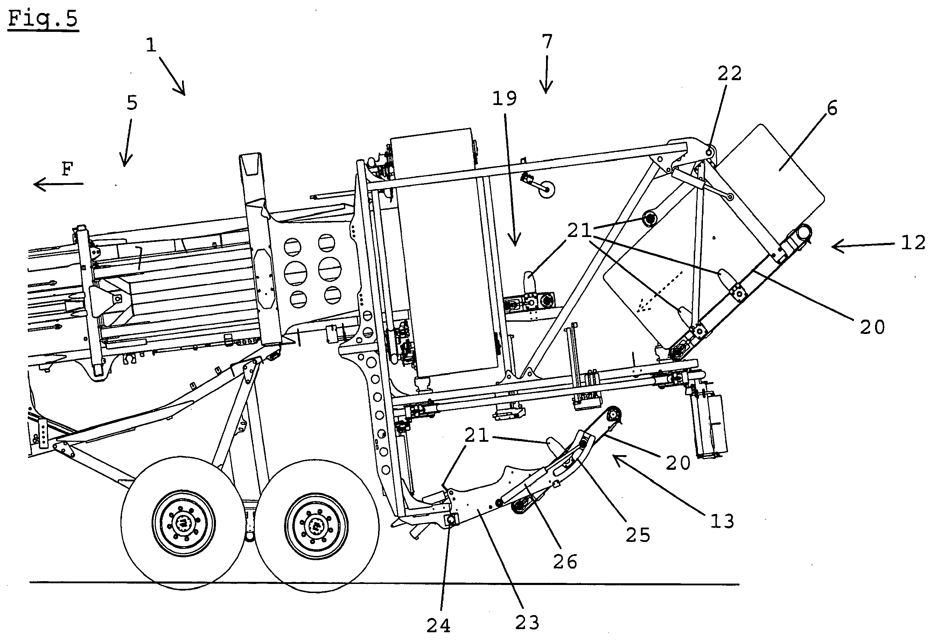

Die **Fig. 5** **u. 6** zeigen die Ballenverlagerung von dem ersten Tisch 12 auf den zweiten Tisch 13, welcher gleichzeitig die Funktionen als Wickeltisch für die zweite Wickelstation 14 und als Ablagevorrichtung für die Ballenablage auf dem Feld erfüllt. Für die Übergabe werden beide Tische in eine Lage verschwenkt, in der ihre Fördereinrichtungen 20 praktisch eine lineare Förderbahn bilden. Durch entsprechend synchronisierten Antrieb der Fördereinrichtungen 20 wird somit der Pressballen 6 kontrolliert und schonend vom ersten Tisch 12 auf den zweiten Tisch 13 überführt. Der erste Tisch 12 verschwenkt dazu in einer Pendelbewegung um die Pendelachse 22, die besonders vorteilhaft so weit oberhalb des ersten Tisches 12 liegt, dass dadurch nach dem Verschwenken der notwendige Freiraum für die Ballenübergabe vorhanden ist.

Der zweite Tisch 13 ist innerhalb eines Schwenkrahmens 23 gehaltert, der um eine ebenfalls quer zur Fahrtrichtung verlaufende Horizontalachse 24 verschwenkbar ist. Die Halterung des zweiten Tisches 13 innerhalb des Schwenkrahmens 23 ist als Kulissenführung 25 derart ausgeführt, dass der zweite Tisch 13 darin, durch einen Hydraulikzylinder 26 angetrieben, eine Art Wiegebewegung ausführen kann. Diese für die Funktion der Ballenwickelvorrichtung 7 des Ausführungsbeispiels nach der Erfindung vorteilhafte Ausführung der Aufnahme des zweiten Tisches 13 kann in einer konstruktiv einfachen Umsetzung, mit Inkaufnahme von Nachteilen auch nur mit einer Schwenkachse ausgeführt werden.

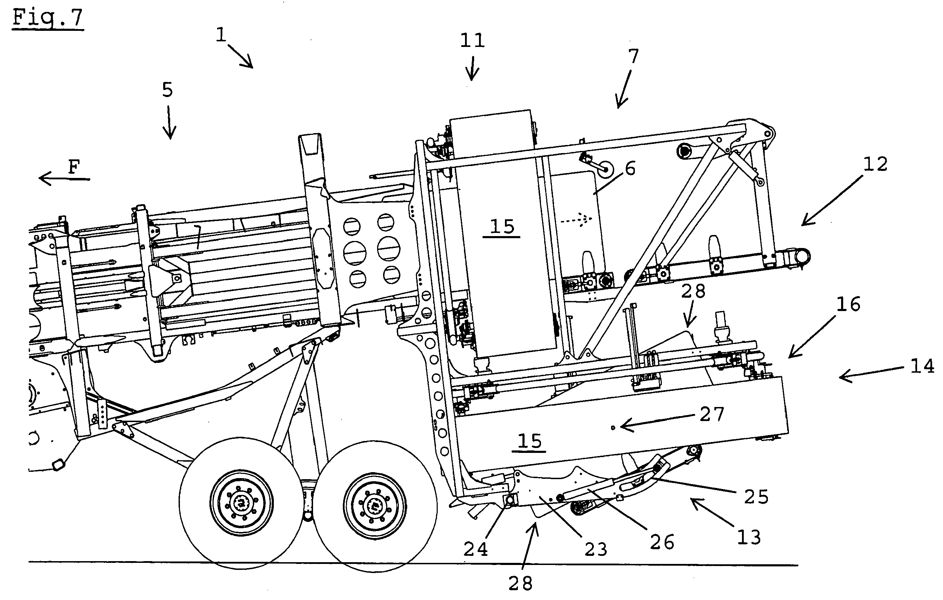

Die **Fig. 7** **u. 8** zeigen den weiteren Funktionsablauf, nachdem der Pressballen 6 vom zweiten Tisch übernommen worden ist. Durch die vorteilhaften Verlagerungsmöglichkeiten des zweiten Tisches 13 wird dieser für die Umwicklung des Pressballens 6 durch die Zweite Wickelstation 14 in eine optimale Position gebracht. Beim folgenden Umwickeln der Außenlängsseiten und Stirnseiten des Pressballens 6 auf dem zweiten Tisch 13, wird der zweite Tisch 13 gleichzeitig in der Kulissenführung 25 des Schwenkrahmens 23 verschwenkt. Dieses Verschwenken entspricht dem Schwenken des Pressballens 6 um seine horizontale Mittelquerachse 27, wodurch eine optimale, luftdichte Abdeckung der Stirnseiten auch über die oberen und unteren Stirnseifenkanten 28 des Pressballens 6 hinaus erzielt wird. Gleichzeitig ist durch die **Fig. 7** **u. 8** der weitere Wickelablauf der ersten Wickelstation 11 erkennbar.

Auf dem zweiten Tisch 13 ist die genaue zentrische Positionierung des Pressballens 6 zu der Führungsbahn der zweiten Wickelstation 14 für ein gutes Wickelergebnis sehr wichtig. Bei variierenden Ballenlängen muss diese auch berücksichtigt werden. Eine vorteilhafte Ausführung dazu umfasst eine elektronische, kontaktlose, eventuell auch optische Erfassung der Lage des Ballens 6 auf dem zweiten Tisch 13, welche durch eine Steuerung ausgewertet wird und daraufhin die notwendigen Korrekturen durch die Fördereinrichtung des zweiten Tisches 13 veranlasst.

In einer einfacheren Ausführung kann auch ein mechanischer Anschlag derart angeordnet sein, dass der Pressballen bei der Übergabe auf den zweiten Tisch 13 gegen diesen läuft und in der Position verbleibt. Für den Wickelvorgang muss dieser Anschlag jedoch aus dem Wickelbereich entfernt werden.

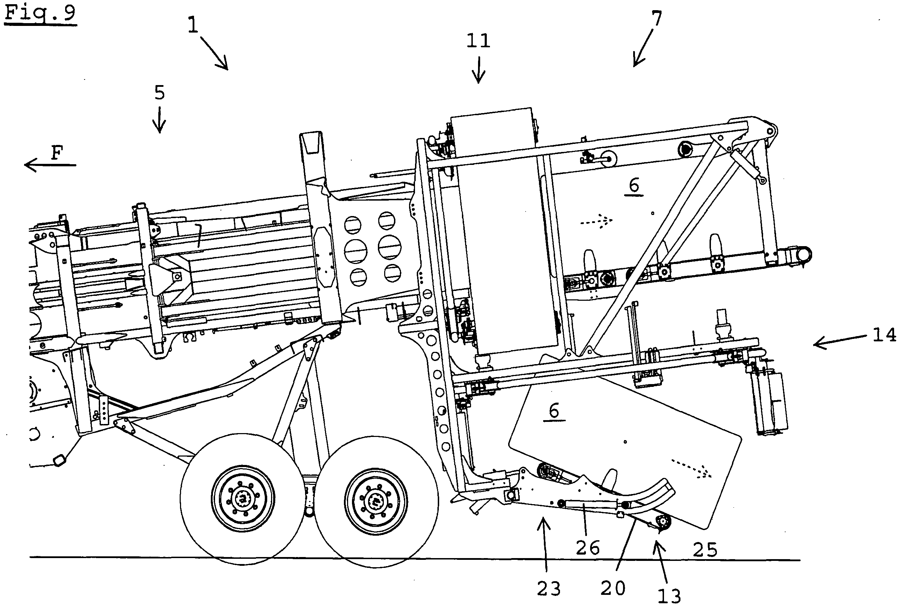

**Fig. 9** zeigt die letzte Phase eines Pressballendurchlaufs der erfindungsgemäßen Press- Wickelkombination. Nach erfolgter kompletter Umhüllung des Pressballens 6 werden auch in der zweiten Wickelstation 14 die Folienbahnen in bekannter Weise abgetrennt und gehalten. Dann wird der zweite Tisch 13 durch das Verschwenken in der Kulissenführung 25 des Schwenkrahmens 23 und durch gleichzeitiges Verschwenken des Schwenkrahmens 23 in eine bevorzugte Position für die Ablage des auf dem Tisch 13 befindlichen Pressballens 6 auf den Erdboden verbracht. Durch die angetriebene Fördereinrichtung des zweiten Tisches 13 erfolgt dann die Ablage.

Zur Optimierung der Ablage können in einer vorteilhaften Ausführung der Ablagewinkel und die Antriebsgeschwindigkeit der Fördereinrichtung des zweiten Tisches 13, gesteuert von einer Steuereinrichtung in Abhängigkeit von Parametern wie beispielsweise Ballengewicht, Ballenlänge, Fahrgeschwindigkeit der Press- Wickelkombination oder Untergrundbeschaffenheit variieren.

In der Zeichnung des Ausführungsbeispiels einer erfindungsgemäßen Press- Wickelkombination 1 ist gut zu erkennen, dass es eine Schnittstelle zwischen Quaderballenpresse 5 und Ballenwickelvorrichtung 7 gibt. Es bietet sich damit an, diese Schnittstelle für weitere Kombinationen zu nutzen. So ist es denkbar, beim Pressen von Materialien, die nicht mit Folie umwickelt werden sollen, die Ballenwickelvorrichtung 7 gegen eine Ballensammel- und/oder Stapelvorrichtung auszutauschen. Die Vorraussetzungen dafür sind bei der Quaderballenpresse 5 durch den hoch liegenden Presskanalauslass 10 ideal gegeben.

## Patentansprüche

1. Press- Wickelkombination (1), insbesondere als von einer Zugmaschine gezogene und angetriebene Landmaschine für das Aufsammeln, Pressen und Einwickeln von landwirtschaftlichem Erntegut, wobei die dabei entstehenden quaderförmigen Pressballen (6) direkt nach dem Pressen, in zumindest zwei voneinander unabhängigen, aufeinanderfolgenden Wickelstationen (11, 14) der Ballenwickelvorrichtung (7) der Press- Wickelkombination (1) komplett mit Wickelmaterial umhüllt werden und die in der ersten Wickelstation (11) und in der zweiten Wickelstation (14) befindlichen Pressballen (6) in voneinander beabstandeten, zumindest annähernd horizontalen Ebenen zueinander positioniert sind, **dadurch gekennzeichnet, dass** der vertikale Abstand der Ebenen zueinander zumindest der Pressballenhöhe entspricht und sich die Wickelstationen (11,14) in einer übereinander liegenden Anordnung befinden.

2. Press- Wickelkombination (1) nach Anspruch 1, **dadurch gekennzeichnet, dass** die zumindest zeitweise gleichzeitig in der ersten und in der zweiten Wickelstation (11, 14) befindlichen Pressballen (6), in einer Ansicht von oben auf die Press-Wickelkombination (1), zumindest teilweise deckungsgleich sind.

3. Press- Wickelkombination (1) nach Anspruch 1 oder 2, **dadurch gekennzeichnet, dass** die Wickelachsen der ersten und der zweiten Wickelstation (11, 14) zumindest annähernd rechtwinklig zueinander liegen.

4. Press- Wickelkombination (1) nach einem der Ansprüche 1 bis 3, **dadurch gekennzeichnet, dass** die erste Wickelstation (11) einen Horizontalwickler und die zweite Wickelstation (14) einen Vertikalwickler aufweist.

5. Press- Wickelkombination (1) nach einem der Ansprüche 1 bis 4, **dadurch gekennzeichnet, dass** die Rollenhalter (16) der zumindest zwei Wickelstationen (11, 14) mit den durch diese aufgenommenen Wickelmaterialrollen (17) zur Abgabe des Wickelmaterials an einen zu umhüllenden Pressballen (6) um den Pressballen (6) rotieren.

6. Press- Wickelkombination (1) nach Anspruch 5, **dadurch gekennzeichnet, dass** die Rollenhalter (16) der zumindest zwei Wickelstationen (11, 14) mit den durch diese aufgenommenen Wickelmaterialrollen (17) zur Abgabe des Wickelmaterials (15) an einen zu umhüllenden Pressballen (6) zumindest zeitweise gleichzeitig um jeweils einen Pressballen (6) rotieren.

7. Press- Wickelkombination (1) nach zumindest einem der vorhergehenden Ansprüche, **dadurch gekennzeichnet, dass** die Rollenhalter (16) der zumindest zwei Wickelstationen (11, 14) mit den durch diese aufgenommenen Wickelmaterialrollen (17) zur Abgabe des Wickelmaterials an einen zu umhüllenden Pressballen (6) auf einer festen Führungsbahn (18) um die Pressballen (6) rotieren, wobei die Pressballen (6) Bewegungen ausführen, welche in Abstimmung mit der Rotationsgeschwindigkeit der Rollenhalter (16) um die Pressballen zum erwünschten Wickelergebnis führen.

8. Press- Wickelkombination (1) nach zumindest einem der vorhergehenden Ansprüche, **dadurch gekennzeichnet, dass** Fördereinrichtungen (20) der Ballenwickelvorrichtung (7) dazu eingerichtet sind, die Pressballen (6) auf ihrem Weg vom Presskanal (9) der Press- Wickelkombination (1) bis zur Ablage auf dem Feld rotationsfrei zu verlagern, wobei die Pressballen (6) ihre zumindest annähernd parallele Längsausrichtung zu einer vertikalen Längsmittelebene der Press- Wickelkombination (1) beibehalten.

9. Press- Wickelkombination (1) nach zumindest einem der vorhergehenden Ansprüche, **dadurch gekennzeichnet, dass** Fördereinrichtungen (20) der Ballenwickelvorrichtung (7) dazu eingerichtet sind, die Pressballen (6) auf ihrem Weg vom Presskanal (9) der Press- Wickelkombination (1) bis zur Ablage auf dem Feld zumindest auf einem Teilabschnitt des Weges in Richtung der Arbeitsfahrtrichtung (F) der Press- Wickelkombination (1) zu verlagern.

10. Press- Wickelkombination (1) nach zumindest einem der vorhergehenden Ansprüche, **dadurch gekennzeichnet, dass** Fördereinrichtungen (20) der Ballenwickelvorrichtung (7) dazu eingerichtet sind, die Pressballen (6) auf ihrem Weg vom Presskanal (9) der Press- Wickelkombination (1) bis zur Ablage auf dem Feld zumindest auf einem Teilabschnitt des Weges gleichzeitig horizontal und vertikal zu verlagern.

11. Press- Wickelkombination (1) nach zumindest einem der vorhergehenden Ansprüche, **dadurch gekennzeichnet, dass** der Presskanal (9) der Press- Wickelkombination (1) derart in einem spitzen Winkel zur Erdoberfläche ausgerichtet ist, dass er nach hinten, in Richtung seiner Auslassöfifnung (10) hin ansteigt.

12. Press- Wickelkombination (1) nach zumindest einem der vorhergehenden Ansprüche, **dadurch gekennzeichnet, dass** die Ballenwickelvorrichtung (7) der Press- Wickelkombination (1) als von der Quaderballenpresse (5) der Press- Wickelkombination (1) trennbare Einheit ausgebildet ist und durch weitere Ballenbehandlungsvorrichtungen wie Ballenstapler und/oder Ballenablagevorrichtungen ersetzbar ist.

## Claims

1. Baler and wrapper combination (1), in particular a driven agricultural machine which is towed by a tractor and is intended for picking up, baling and wrapping agricultural crops, the rectangular pressed bales (6) created thereby being completely wrapped in wrapping material in at least two independent, consecutive wrapping stations (11, 14) of the bale wrapping device (7) of the baler and wrapper combination (1) immediately after being pressed, and the pressed bales located in the first wrapping station (11) and in the second wrapping station (14) being positioned relative to one another in planes that are at a distance from one another and are at least approximately horizontal, **characterised in that** the vertical distance between the planes corresponds at least to the height of the pressed bales and the wrapping stations (11, 14) are located one on top of another.

2. Baler and wrapper combination (1) according to claim 1, **characterised in that**, when the baler and wrapper combination (1) is viewed from above, the pressed bales (6) that are located at least temporarily simultaneously in the first and second wrapping station (11, 14) are at least partially congruent.

3. Baler and wrapper combination (1) according to either claim 1 or claim 2, **characterised in that** the wrapping axes of the first and the second wrapping station (11, 14) are at least approximately perpendicular to one another.

4. Baler and wrapper combination (1) according to any of claims 1 to 3, **characterised in that** the first wrapping station (11) comprises a horizontal wrapping apparatus and the second wrapping station (14) comprises a vertical wrapping apparatus.

5. Baler and wrapper combination (1) according to any of claims 1 to 4, **characterised in that** the reel holders (16) of the at least two wrapping stations (11, 14), together with the reels (17) of wrapping material held thereby, rotate around the pressed bales (6) in order to deliver the wrapping material to a pressed bale (6) to be wrapped.

6. Baler and wrapper combination (1) according to claim 5, **characterised in that** the reel holders (16) of the at least two wrapping stations (11, 14), together with the reels (17) of wrapping material held thereby, each rotate around a pressed bale (6) at least temporarily simultaneously in order to deliver the wrapping material (15) to a pressed bale (6) to be wrapped.

7. Baler and wrapper combination (1) according to at least one of the preceding claims, **characterised in that** the reel holders (16) of the at least two wrapping stations (11, 14), together with the reels (17) of wrapping material held thereby, rotate around the pressed bales (6) on a fixed guide track (18) in order to deliver the wrapping material to a pressed bale (6) to be wrapped, the pressed bales (6) performing movements which correlate to the rotational speed of the reel holders (16) around the pressed bales to achieve the desired wrapping result.

8. Baler and wrapper combination (1) according to at least one of the preceding claims, **characterised in that** conveying apparatuses (20) of the bale wrapping device (7) are designed to move the pressed bales (6) in a rotation-free manner on their way from the press channel (9) of the baler and wrapper combination (1) to being deposited on the field, the pressed bales (6) retaining their longitudinal orientation which is at least approximately parallel to a vertical longitudinal plane of the baler and wrapper combination (1).

9. Baler and wrapper combination (1) according to at least one of the preceding claims, **characterised in that** conveying apparatuses (20) of the bale wrapping device (7) are designed to move the pressed bales (6), on their way from the press channel (9) of the baler and wrapper combination (1) to being deposited on the field, in the working direction of travel (F) of the baler and wrapper combination (1) along at least a portion of the way.

10. Baler and wrapper combination (1) according to at least one of the preceding claims, **characterised in that** conveying apparatuses (20) of the bale wrapping device (7) are designed to move the pressed bales (6), along at least a portion of the way, simultaneously horizontally and vertically on their way from the press channel (9) of the baler and wrapper combination (1) to being deposited on the field.

11. Baler and wrapper combination (1) according to at least one of the preceding claims, **characterised in that** the press channel (9) of the baler and wrapper combination (1) is formed at an acute angle to the surface of the ground such that it slopes upwards to the rear in the direction of its outlet opening (10).

12. Baler and wrapper combination (1) according to at least one of the preceding claims, **characterised in that** the bale wrapping device (7) of the baler and wrapper combination (1) is formed as a unit that can be separated from the rectangular baler (5) of the baler and wrapper combination (1) and can be replaced by further bale processing devices, such as bale stackers and/or bale depositing devices.

## Revendications

1. Combiné presse-enrubanneuse (1) en particulier réalisé sous la forme d'une machine agricole tractée et actionnée par un véhicule tracteur pour le ramassage, la compression et l'enrubannage de produits de récolte agricoles, dans lequel les balles comprimées rectangulaires (6) formées, sont totalement entourées d'un matériau d'enrubannage directement après la compression, dans au moins deux postes d'enrubannage (11, 14) successifs indépendants l'un de l'autre du dispositif d'enrubannage de balles (7) du combiné presse enrubanneuse, et les balles comprimées (6) situées dans le premier poste d'enrubannage (11) et dans le second poste d'enrubannage (14) sont positionnées l'une par rapport à l'autre dans des plans au moins essentiellement horizontaux situés à distance l'un de l'autre, **caractérisé en ce que** la distance verticale des plans l'un par rapport à l'autre correspond au moins à la hauteur des balles comprimées, et les postes d'enrubannage (11, 14) sont situés l'un au-dessus de l'autre.

2. Combiné presse-enrubanneuse (1) conforme à la revendication 1, **caractérisé en ce que**
les balles comprimées (6) se trouvant au moins par intermittence simultanément dans le premier et dans le second postes d'enrubannage (11, 14) sont au moins partiellement en coïncidence selon une vue de dessus du combiné presse-enrubanneuse (1).

3. Combiné presse-enrubanneuse (1) conforme à la revendication 1 ou 2,
**caractérisé en ce que**
les axes d'enrubannage du premier et du second postes d'enrubannage (11, 14) sont au moins essentiellement perpendiculaires.

4. Combiné presse-enrubanneuse (1) conforme à l'une des revendications 1 à 3,
**caractérisé en ce que**
le premier poste d'enrubannage (11) comprend un organe d'enrubannage horizontal et le second poste d'enrubannage (14) comprend un organe d'enrubannage vertical.

5. Combiné presse-enrubanneuse (1) conforme à l'une des revendications 1 à 4,
**caractérisé en ce que**
les porte-rouleaux (16) des postes d'enrubannage (11, 14) au moins au nombre de deux tournent autour des balles comprimées (6) avec les rouleaux de matériau d'enrubannage (17) qu'ils reçoivent pour permettre de délivrer le matériau d'enrubannage à une balle comprimée (6) devant être entourée.

6. Combiné presse-enrubanneuse (1) conforme à la revendication 5,
**caractérisé en ce que**
les porte-rouleaux (16) des postes d'enrubannage (11, 14) au moins au nombre de deux tournent au moins par intermittence simultanément autour d'une balle comprimée respective (6) avec les rouleaux de matériau d'enrubannage (17) qu'ils reçoivent pour permettre de délivrer le matériau d'enrubannage (15) à une balle comprimée (6) devant être entourée.

7. Combiné presse-enrubanneuse (1) conforme à au moins l'une des revendications précédentes,
**caractérisé en ce que**
les porte-rouleaux (16) des postes d'enrubannage (11, 14) au moins au nombre de deux tournent autour des balles comprimées (6) sur une voie de guidage fixe (18) avec les rouleaux de matériau d'enrubannage (17) qu'ils reçoivent pour délivrer le matériau d'enrubannage à une balle comprimée (6) devant être entourée, les balles comprimées (6) exécutant des mouvements qui, en coordination avec la vitesse de rotation des porte-rouleaux (16) autour des balles comprimées conduisent au résultat d'enrubannage souhaité.

8. Combiné presse-enrubanneuse (1) conforme au moins une des revendications précédentes,
**caractérisée en ce que**
des dispositifs d'alimentation (20) du dispositif d'enrubannage des balles (7) sont réalisés pour déplacer sans rotation les balles comprimées (6) sur leur trajectoire entre le canal de compression (9) du combiné presse-enrubanneuse (1) jusqu'à leur dépôt sur le champ, les balles comprimées (6) conservant leur orientation longitudinale au moins essentiellement parallèle par rapport à un plan médian longitudinal vertical du combiné presse-enrubanneuse (1).

9. Combiné presse-enrubanneuse (1) conforme à au moins l'une des revendications précédentes,
**caractérisé en ce que**
des dispositifs d'alimentation (20) du dispositif d'enrubannage des balles (7) sont réalisés pour déplacer les balles comprimées (6) sur leur trajectoire entre le canal de compression (9) du combiné presse-enrubanneuse (1) jusqu'à leur dépôt sur le champ au moins sur un segment partiel de la trajectoire en direction de la direction de déplacement de travail (F) du combiné presse-enrubanneuse (1).

10. Combiné presse-enrubanneuse (1) conforme à au moins l'une des revendications précédentes,
**caractérisé en ce que**
des dispositifs d'alimentation (20) du dispositif d'enrubannage des balles (7) sont réalisés pour déplacer simultanément horizontalement et verticalement les balles comprimées (6) sur leur trajectoire entre le canal de compression (9) du combiné presse-enrubanneuse (1) et leur dépôt sur le champ, au moins sur un segment partiel de cette trajectoire.

11. Combiné presse-enrubanneuse (1) conforme à au moins l'une des revendications précédentes,
**caractérisé en ce que**
le canal de compression (9) du combiné enrubanneuse (1) est orienté selon un angle aigu par rapport à la surface du sol de sorte qu'il monte vers l'arrière en direction de son ouverture de sortie (10).

12. Combiné presse-enrubanneuse (1) conforme à au moins l'une des revendications précédentes,
**caractérisé en ce que**
le dispositif d'enrubannage des balles (7) du combiné presseenrubanneuse (1) est réalisé sous la forme d'une unité séparable de la presse à balles rectangulaires (5) du combiné presse-enrubanneuse (1) et peut être remplacé par d'autres dispositifs de traitement des balles tels que des empileurs de balles et/ou des dispositifs de dépôt des balles.
